# EUROPÄISCHE PATENTSCHRIFT

(11) **EP 0 611 406 B1**
(45) Veröffentlichungstag und Bekanntmachung des Hinweises auf die Patenterteilung: **26.04.1995**
(21) Anmeldenummer: 92922145.5
(22) Anmeldetag: 28.10.1992
(51) Int. Cl.: E04B 1/76, B32B 5/22

(54) **DÄMMATERIAL ALS PLATTE ODER ROLLBAHN FÜR NEUE UND SANIERUNGSBEDÜRFTIGE BAUWERKE**
INSULATING MATERIAL IN BOARD OR WEB FORM FOR NEW STRUCTURES AND STRUCTURES TO BE RENOVATED
MATERIAU ISOLANT SOUS FORME DE PANNEAU OU DE BANDE POUR OUVRAGES NEUFS OU NECESSITANT UNE RENOVATION

(30) Priorität: 29.10.1991 DE 9113436 U
(43) Veröffentlichungstag der Anmeldung: 24.08.1994
(73) Patentinhaber: Prignitz, Herbert, 22117 Hamburg (DE)
(72) Erfinder: Prignitz, Herbert, 22117 Hamburg (DE)
(74) Vertreter: Richter, Werdermann & Gerbaulet
(86) Internationale Anmeldenummer: EP9202464
(87) Internationale Veröffentlichungsnummer: WO9309306

(56) Entgegenhaltungen:
- AT-A- 384 259
- DE-A- 2 640 065
- US-A- 3 745 052
- US-A- 4 425 396

## Beschreibung

Das Dämmaterial ist überall der einsetzbar, wo Flächen, insbesondere Außenflächen von Gebäuden und Bauwerken mit einer Wärmedämmung versehen werden sollen.

Die Erfindung betrifft ein Dämmaterial als Platte oder Rollbahn für neue und sanierungsbedürftige Bauwerke zum Aufsetzen auf tragendes Mauerwerk, die als Mehrschichtenbauplatte mit einem etwa rechteckigen Plattenkörper oder als Rollbahn aus Polyurethanschaum, aus Polystyrol-Partikelschaum, aus extrudiertem Polystyrol oder Mineralfaser als Dämmaterial besteht, wobei das Dämmaterial mindestens auf einer seiner großflächigen Seiten mit einem Abdeckmaterial versehen ist, wobei auf das Wärmedämmaterial als Abdeckmaterial eine Trägerschicht für Mauerwerks- bzw. Dämmaterial-Abdeckmaterialien als Verblendungsmaterial aufgebracht ist, und ein Verfahren zur Herstellung von Dämmplatten.

### Stand der Technik

Um die hohen Forderungen, die heute an den Wärmeschutz von Gebäuden und Bauwerken gestellt werden, erfüllen zu können, müssen auch die Umfassungswände von Gebäuden mit einem Wärmeschutz ggf. mit einem zusätzlichen verstärkendem Wärmeschutz versehen werden. Da tragende Mauern allein den Anforderungen an den erhöhten Wärmeschutz, d.h. an die möglichst geringe Wärmedurchlässigkeit, nicht gerecht werden können, sind bereits verschiedenste Dämmaterialien vorgeschlagen worden.

So ist bereits eine Bauplatte, bestehend aus einem plattenförmigen Kern aus einem wärmedämmenden Material und mit mindestens einer ebenen Deckschicht bekannt, wo der plattenförmige Kern auf einer Flachseite mit einem Rastermuster angeordnete Vorsprünge aufweist, an denen die Deckschicht befestigt ist, wobei die Bauplatte zum Einsetzen zwischen die das tragende Mauerwerk und das Verblendmauerwerk von Gebäuden bildenden Mauerschalen zur gleichzeitigen Herstellung eines Wärmeschutzes und einer Hinterlüftung des Verblendmauerwerkes vorgesehen ist. Die Vorsprünge mit der Deckschicht sind dabei dem Verblendmauerwerk zugewandt (DE-OS 26 40 065).

Derartige Bauplatten sind jedoch nicht geeignet, eine innige Verbindung mit einer Verblendung einzugehen. Das bedeutet, daß beim Aufsetzen eines Verblendmauerwerkes üblicherweise noch eine Zwischenschicht zwischen Wärmedämmung und Verblendmauerwerk aufgebracht wird. Wenn beispielsweise vorgesehen ist, als eine mechanisch nicht oder nur gering belastete Verblendung nur eine dünne Putzschicht oder Kunststoffputzschicht aufzubringen, ist es notwendig, daß vor der Wärmedämmung eine Trägerschicht angeordnet wird, auf die dann der Putz aufgebracht werden kann.

Bei den bekannten Wärmedämmaterialien und den ebenfalls bekannten Vorgehensweisen zur Ausbildung und/oder Sanierung von Umfassungswänden von Gebäuden ist es notwendig, daß verschiedene Materialien hintereinander in aufeinanderfolgenden und teilweise zeitlich beabstandeten Arbeitsgängen aufgebracht werden.

So ist bereits eine Dämmplatte für Bauwerke zum Aufsetzen auf tragendes Mauerwerk vorgeschlagen worden, die als mehrschichtige Bauwerksaußenwandverkleidung ausgebildet ist und aus einer Wärmedämmschicht, die an der Außenseite einer Bauwerksaußenwand befestigt wird, und einem vor der Wärmedämmschicht angeordneten Putzträger, auf den außenseitig eine Putzschicht aufbringbar ist, besteht. Der Putzträger wird mit der Wärmedämmschicht verkelbt, wobei zwischen der Wärmedämmschicht und dem Putzträger ein mit der Außenluft in Verbindungen stehender Luftraum zur Hinterlüftung des Putzträgers ausgebildet ist. Der Luftraum wird von nutförmigen Vertiefungen in der Wärmedämmschicht und von im Putzträger ausgebildeten Kanälen gebildet. Die Ausbildung einer Flüssigkeitssperrschicht ist hierbei nicht vorgesehen, so daß eine Versottung des Wärmedämmaterials nicht ausgeschlossen werden kann (AT-A 38 42 255).

Aus der US-A 37 45 052 ist ein Dämmaterial als Platte für Bauwerke zum Aufsetzen auf tragendes Mauerwerk bekannt, die als Mehrschichtenbauplatte aus einem rechteckigen Plattenkörper aus Polyurethanschaum als Wärmedämmaterial besteht, welches auf einer seiner großflächigen Seiten mit einem Abdeckmaterial versehen ist. Auf das Wärmedämmaterial ist das Abdeckmaterial als Trägerschicht für ein Dämmmaterial-Abdeckmaterial aufgebracht. Die Trägerschicht besteht aus einem Glasfasermaterial, das mit einem Expoxid oder Polyester imprägniert ist. Da das Abdeckmaterial aus einer Beschichtung mit Kieselsteinen besteht, ist nicht sichergestellt, daß die Glasfasermaterialschicht eine einer Durchfeuchtung entgegenwirkende Dicke und Stabilität aufweist.

### Aufgabe, Lösung, Vorteile

Es ist daher Aufgabe der vorliegenden Erfindung, ein Dämmaterial der eingangs genannten Art so weiterzubilden, daß in einem Arbeitsgang die Wärmedämmung und die notwendige Verbindungsschicht auf das tragende Mauerwerk aufgebracht werden kann, so daß dieses zur Aufnahme der Verblendung vorbereitet ist.

Diese Aufgabe wird durch die im Anspruch 1 gekennzeichneten Merkmale gelöst.

Durch die Verwendung einer Trägerschicht auf dem Wärmedämmaterial ist die Möglichkeit gegeben, direkt auf den Platten oder der Rollbahn eine Verblendung anzubringen. Hier kann beispielsweise ein Kunststoffmörtel oder ein Abdeckputz aufgebracht werden, auch ist es möglich, direkt ein Verblendmauerwerk in Form von dünnen Klinkern oder Riemchen auf den Platten oder der Rollbahn anzuordnen.

Erfindungsgemäß ist vorgesehen, daß die Trägerschicht auf ihrer dem Dämmaterial zugewandten Seite mit einer Beschichtung versehen ist. Diese Beschichtung verbindet sich bevorzugterweise aufgrund ihrer physikalischen und chemischen Eigenschaften intensiv mit dem Wärmedämmaterial, so daß die Trägerschicht fest auf dem Wärmedämmaterial haftet. Es ist vorgesehen, daß die Beschichtung als Flüssigkeitssperrschicht ausgebildet ist, so daß gewährleistet ist, daß durch die Verblendung eingedrungene Feuchtigkeit nicht in das Dämmaterial eindringen kann. Die Beschichtung, die sich gleichzeitig auch intensiv mit der Trägerschicht verbindet, indem sie 1/10 bis 1/2 der Dicke der Trägerschicht in die Trägerschicht eindringend aufgebracht wird, dient somit als Verbindungsschicht zwischen dem Trägermaterial und der Dämmaterialschicht. Die Dicke der Beschichtung selbst wird jeweils nach dem Anwendungsgebiet bestimmt. Dadurch, daß die Beschichtung eindringend aufgebracht wird und keine Durchtränkung der Trägerschicht erfolgt, ist eine problemlose Anbringung des Abdeckmaterials auf der anderen Seite der Trägerschicht möglich.

Bevorzugterweise besteht die Beschichtung der Trägerschicht aus einem Harz, insbesondere einem Kunstharz, wobei sich insbesondere Epoxidharze bewährt haben, da diese eine innige Verbindung mit den Dämmstoffen eingehen.

Die Trägerschicht, die aus einem Vliesstoff besteht, wird bevorzugterweise als Polyestervlies ausgebildet und sie kann auf ihrer von der Beschichtung mit dem Harz abgewandten Seite mit einer offenporigen, aufgerauhten und/oder profilierten Oberfläche versehen werden, um die Aufbringung und Halterung von Zementmörtel, Kunstharzmörtel, einem Kunststoffputz oder einem Kunststoffkörnerputz zu erleichtern.

Damit die Dämmplatte bzw. die Rollbahn auch höheren mechanischen Beanspruchungen widerstehen kann, ist bevorzugterweise vorgesehen, daß das Dämmaterial mit einem Stabilisierungsgewebe versehen ist.

Um eine Feuchtigkeitsdiffusion aus dem tragenden Mauerwerk in einfacher Weise zu ermöglichen und sicherzustellen, ist bevorzugterweise vorgesehen, daß in das Dämmaterial an der der Trägerschicht gegenüberliegenden Fläche Difusionskanäle eingearbeitet sind. Diese werden ausgebildet, indem auf der Oberfläche der der Trägerschicht gegenüberliegenden Seite ballige Vorsprünge rasterförmig ausgebildet sind. Bevorzugterweise ist dabei auf das Dämmaterial auf der der Trägerschicht gegenüberliegenden Fläche eine Metallfolie als Dampfbremse aufkaschiert.

Vorteilhafterweise ist es möglich, Dämmplatten oder Rollbahnen in der erfindungsgemäßen Ausgestaltung fortlaufend kontinuierlich herzustellen, indem unter Verwendung zweier parallel beweglicher, endloser Fördergurte eine Vliesstoffbahn als Trägerschicht einseitig mit einer Beschichtung versehen auf einen der Fördergurte aufgelegt, ein aufschäumbarer Stoff, insbesondere Polyurethanschaum auf die die Beschichtung aufweisende Seite der Vliesstoffbahn aufgetragen und anschließend zwischen den beiden Fördergurten als Formkörper aufgeschäumt wird, wobei vorteilhafterweise auf den zweiten Fördergurt eine mit durchgehenden Öffnungen entsprechend der Grundrißkontur der zu bildenden Vorsprünge versehene Formschicht und auf diese Formschicht die Metallfolie aufgelegt wird, so daß durch den Schaumdruck die Metallfolie unter Ausbildung balliger Vorsprünge in die Öffnungen der Formschicht gedrückt wird.

Durch Anordnung einer an sich bekannten Schneidvorrichtung zum spanlosen Schneiden von Hartschaumstoffkörpern (DE-PS 24 08 319) ist es möglich, kontinuierlich Rollbahnen problemlos herzustellen.

Um die Anwendungsmöglichkeiten der erfindungsgemäßen Dämmplatte oder der Rollbahn an alle Anforderungsfälle anzupassen, kann vorgesehen sein, daß die zur Ausbildung der Difusionskanäle vorgesehenen Vorsprünge auch eine rippenartige, eine kegelstumpfförmige oder eine andere geometrische Form darstellende Ausbildung aufweisen, wenn hierdurch eine geeignete Ausbildung der Diffusionskanäle gewährleistet ist. Weiterhin kann zur Erhöhung der Formstabilität der Dämmplatte oder der Rollbahn, insbesondere für höchste Beanspruchungen vorgesehen werden, daß nicht nur das Dämmaterial, sondern auch die Trägerschicht mit einem Stabilisierungs- oder Verstärkungsgewebe versehen ist.

Vorteilhafte und zweckmäßige Ausgestaltung der Erfindung sind in den Unteransprüchen gekennzeichnet.

### Kurze Beschreibung der Zeichnungen

Nachstehend wird anhand schematischer Zeichnungen ein Ausführungsbeispiel der Erfindung näher erläutert. Es zeigen
- **Fig.1**: in einer schaubildlichen Darstellung eine an einem Mauerwerk angeordnete Dämmplatte in rein schematischer Ansicht,
- **Fig.2**: einen Teilschnitt gemäß Linie II-II in Figur 1, und
- **Fig.3**: eine Rückansicht der Dämmplatte gemäß III-III in Fig. 2 in einer Teildarstellung.

### Detaillierte Beschreibung der Erfindung und bester Weg zur Ausführung der Erfindung

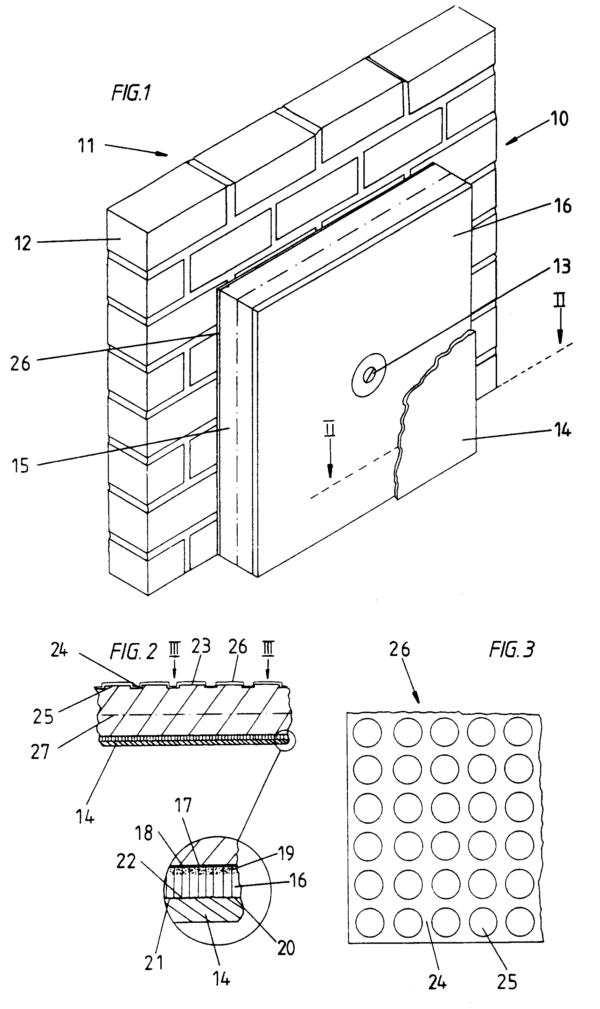

In Figur 1 ist als Anwendungsbeispiel eine Dämmplatte 10 dargestellt, die an einem tragenden Mauerwerk 11, das aus Ziegeln 12 aufgebaut ist, vermittels an sich bekannter Dübel 13 befestigt. Zur Abdeckung einer solchen Mauer 11 werden mehrere Dämmplatten (in der Zeichnung nicht dargestellt) nebeneinander angeordnet oder auch Teile hiervon, so daß eine vollflächige Abdeckung des Mauerwerks entsteht. Auf diese Weise wird eine glatte Oberfläche ausgebildet, auf die beispielsweise eine in Figur 1 nur angedeutete Schicht eines Zementmörtels 14 als Verblendungsmaterial aufgebracht werden kann.

Wie in Figur 2 und 3 dargestellt ist, bestehen die Dämmplatten 10 aus Wärmedämmaterial 15, das auf einer Trägerschicht 16, die aus einem Vliesstoff besteht, angeordnet ist. Die Trägerschicht 16 ist dabei auf ihrer dem Wärmedämmaterial 15 zugewandten Seite mit einer Beschichtung 18 beispielsweise aus einem Epoxidharz versehen, wobei die Beschichtung 18 so auf die Trägerschicht 16 aufgebracht wird, daß diese auch in die Trägerschicht 16 eindringt, was bei 19 angedeutet ist. Die Beschichtung 18 verbindet sich beim Auftragen des Wärmedämmaterials 15 mit diesem, d.h. sie wirkt wie ein Kleber, so daß eine feste Verbindung zwischen dem Wärmedämmaterial 15 und der Trägerschicht 16 geschaffen wird. Gleichzeitig wirkt die Beschichtung 18 als Flüssigkeitssperrschicht. Sie wird mit einer Eindringtiefe von 1/10 bis 1/2 der Dicke der Trägerschicht 16 in die Trägerschicht bei 19 eindringend aufgebracht.

Die dem Wärmedämmaterial 15 gegenüberliegende Seite 20 der Trägerschicht 16 weist dabei schon aufgrund des verwendeten Materials eine rauhe Oberfläche auf, jedoch kann hier auch eine Profiloberfläche 21 mit besonders ausgebildeten Einziehungen, Hinterschneidungen u.dgl. 22 vorgesehen werden, so daß eine äußerst feste Verbindung zwischen der Trägerschicht 16 und der Verblendung 14 entsteht. Die Verblendung kann dabei aus Zementmörtel, Kunstharzmörtel oder einem Kunststoff-Putz oder -körnerputz o.dgl. bestehen.

Die Trägerschicht selbst besteht aus einem Vliesstoff aus Kunststoffmaterialien und/oder textilen Materialien und/oder einem Gewebe aus Kunststoff- oder Glasfasern oder organischen Fasern wie Jute o.dgl., und ist bevorzugterweise ein Vliesstoff auf Polyesterbasis.

Die von der Trägerschicht 16 abgewandte Seite 23 des Wärmedämmaterials 15 ist zur Ausbildung von Diffusionskanälen 24 mit balligen Vorsprüngen 25 in regelmäßiger Anordnung versehen. Diese sind als flache Kuppen ausgebildet, wobei auch jede andere geeignete Ausbildung und Anordnung vorgesehen sein kann, durch die gewährleistet ist, daß zwischen dem zu bedeckenden Mauerwerk 11 und dem Wärmedämmaterial 15 eine Entfeuchtungszone entsteht, in der sich dann ein Partialdruck ergibt, der aufgrund seiner Relation zum Partialdruck der Umgebungsluft zu einem Abführen der Feuchtigkeit aus der Bauwerksoberfläche führt. Durch die dargestellte Anordnung werden besonders breite, durchgehende und regelmäßige Dampfentspannungswege geschaffen, die eine sichere Entfeuchtung gewährleisten.

Auf der Seite 23 des Wärmedämmaterials 15 ist zur Abdeckung des Wärmadämmaterials als Dampfbremse eine Metallfolie 26 aufgebracht. Zur Verstärkung der Dämmplatten ist im Wärmedämmaterial 15 ein Stabilisierungsgewebe 27 eingebracht.

## Patentansprüche

1. Dämmaterial als Platte (10) oder als Rollbahn für neue und sanierungsbedürftige Bauwerke zum Aufsetzen auf tragendes Mauerwerk (11), die als Mehrschichtenbauplatte mit einem etwa rechteckigen Plattenkörper oder als Rollbahn aus Polyurethanschaum, aus Polystyrol-Partikelschaum aus extrudiertem Polystyrol oder Mineralfaser als Wärmedämmaterial (15) besteht, wobei das Wärmedämmmaterial (15) mindestens auf einer seiner großflächigen Seiten mit einem Abdeckmaterial versehen ist, wobei auf das Wärmedämmaterial (15) als Abdeckmaterial eine Trägerschicht (16) für Mauerwerks- bzw. Dämmaterial-Abdeckmaterialien (14) als Verblendungsmaterial aufgebracht ist,
dadurch gekennzeichnet,
daß die Trägerschicht (16) aus einem Vliesstoff aus Kunststoffmaterialien und/oder textilen Materialien und/oder einem Gewebe aus Kunststoff- oder Glasfasern oder organischen Fasern wie Jute o.dgl. besteht, und daß die Trägerschicht (16) auf ihrer dem Wärmedämmaterial (15) zugewandten Seite (17) mit einer Beschichtung (18) versehen ist, die als Flüssigkeitssperrschicht und mit einer Eindringtiefe von 1/10 bis 1/2 Dicke der Trägerschicht (16) in die Trägerschicht (bei 19) eindringend aufgebracht ist.

2. Dämmaterial nach Anspruch 1,
dadurch gekennzeichnet,
daß die Beschichtung (18) als Verbindungsschicht zwischen dem Wärmedämmaterial (15) und der Trägerschicht (16) ausgebildet ist.

3. Dämmaterial nach einem der Ansprüche 1 oder 2,
dadurch gekennzeichnet,
daß die Trägerschicht (16) ein Vliesstoff auf Polyesterbasis ist.

4. Dämmaterial nach einem der Ansprüche 1 bis 3,
dadurch gekennzeichnet,
daß die Beschichtung (18) ein Harz, insbesondere ein Kunstharz, ist.

5. Dämmaterial nach Anspruch 4,
dadurch gekennzeichnet,
daß die Beschichtung (18) ein Epoxidharz ist.

6. Dämmaterial nach einem der Ansprüche 1 bis 5,
dadurch gekennzeichnet,
daß die Trägerschicht (16) auf ihrer von dem Wärmedämmaterial (15) abgewandten Seite (20) eine offenporige und/oder profilierte Oberfläche (21) zur Aufbringung und Halterung von Zementmörtel, Kunstharzmörtel oder einem Kunststoff-Putz oder -körnerputz o.dgl. aufweist.

7. Dämmaterial nach einem der Ansprüche 1 bis 6,
dadurch gekennzeichnet,
daß das Wärmedämmaterial (15) mit einem Stabilisierungs- oder Verstärkungsgewebe (27) versehen ist.

8. Dämmaterial nach einem der Ansprüche 1 bis 7,
dadurch gekennzeichnet,
daß in das Wärmedämmaterial (15) an der der Trägerschicht (16) gegenüberliegenden Fläche (23) Diffusionskanäle (24) eingearbeitet sind.

9. Dämmaterial nach einem der Ansprüche 1 bis 8,
dadurch gekennzeichnet,
daß auf das Wärmedämmaterial (15) an der der Trägerschicht (16) gegenüberliegenden Fläche (23) eine Metallfolie (26) aufkaschiert ist.

10. Verfahren zur Herstellung von Dämmplatten für neue und sanierungsbedürftige Bauwerke zum Aufsetzen auf tragendes Mauerwerk, die als Mehrschichtenbauplatte mit einem etwa rechteckigen Plattenkörper aus Polyurethanschaum, als Wärmedämmaterial besteht, wobei das Wärmedämmaterial mindestens auf einer seiner großflächigen Seiten mit einem Abdeckmaterial versehen ist,
dadurch gekennzeichnet,
daß unter Verwendung zweier parallel beweglicher, endloser Fördergurte eine Vliesstoffbahn einseitig mit einer Beschichtung versehen auf einen der Fördergurte aufgelegt, ein aufschäumbarer Polyurethanschaum, auf die die Beschichtung aufweisende Seite der Vliesstoffbahn aufgebracht und anschliessend nach Durchlauf zwischen den beiden Fördergurten als ausgehärteter Formkörper aus dem endlosen Strang in Platten geschnitten wird.

## Claims

1. An insulating material as a board (10) or as a continuous roll for putting on a bearing walling (11) of new buildings and those which need to be renovated, which insulating material, being a multilayered building board comprising an approximately rectangular board body or a continuous roll, uses polyurethane foam, polystyrene particle foam, extruded polystyrene or mineral fiber as heat insulating material (15),said heat insulating material (15) being provided with a covering material on at least one of its large-surface sides, said heat insulating material (15) as covering material being provided with a base layer (16) for covering materials of brickwork- resp.insulating material as a facing material,
characterized in
that said base layer (16) consists of a non-woven fabric of synthetic materials and/or textile materials and/or a fabric of synthetic or glass fibers or organic fibers as jute ot suchlike,and that said base layer (16) on its side (17) facing said heat insulating material (15) is provided with a coating (18), said coating (18) being used as a liquid resistive layer and put on said base layer (at 19) so as to penetrate into the latter at a penetration depth of 1/10 to 1/2 of the thickness of said base layer.

2. The insulating material according to claim 1,
characterized in
that said coating (18) is defined as a connecting layer between said insulating material (15) and said base layer (16).

3. The insulating material according to any of the claims 1 or 2
characterized in
that said base layer (16) is a non-woven fabric on polyester basis.

4. The insulating material according to any of the claims 1 to 3,
characterized in that said coating (18) is a resin, especially an artificial resin.

5. The insulating material according to claim 4,
characterized in
that said coating (18) is an epoxy resin.

6. The insulating material according to any of the claims 1 to 5,
characterized in
that its side (20) opposite to said heat insulating material (15) said base layer (16) comprises an open-pore and/or profiled upper surface (21) for the application and adhesiveness of cement mortar, synthetic resin mortar or a synthetic plaster or granular synthetic plaster or suchlike.

7. The insulating material according to any of the claims 1 to 6,
characterized in
that said heat insulating material (15) is provided with a stabilizing or reinforcing fabric (27).

8. The insulating material according to any of the claims 1 to 7,
characterized in
that on the face (23) opposite to said base layer (16) said heat insulating material (15) is provided with diffusion channels (24).

9. The insulating material according to any of the claims 1 to 8,
characterized in
that on the face (23) opposite to said base layer (16) said heat insulating material (15) is covered with a metal foil (26).

10. Method for preparing insulating boards for new buildings and those which need to be renovated for putting them on a bearing walling, which insulating boards, being multilayered building boards comprising an approximately rectangular board body, use polyurethane foam as heat insulating material, said heat insulating material on at least one of its large-surface sides being provided with a covering material
characterized in
that, by using two parallely movable endless conveyor belts, a non-woven fabric web is put on one of said conveyor belts after having provided it with a one-side coating a foaming polyurethane foam is applied to the coated side of said non-woven fabric and, thereafter, after having passed said two conveyor belts, is cut into boards from the endless piece as a hardened molded body.

## Revendications

1. Matériau isolant sous forme de panneau (10) ou de bande enroulée pour des bâtiments neufs et nécessitant une rénovation à poser sur un ouvrage de maçonnerie porteur (11) qui existe en tant que matériau calorifuge (15) sous forme de panneau multicouches avec un corps de panneau à peu près rectangulaire ou de bande enroulée en mousse de polyuréthane, mousse de particules de polystyréne, polystyrène extrudé ou en fibres minérales, le matériau calorifuge (15) étant pourvu au moins sur l'un de ses côtés à grande surface d'un matériau de recouvrement, une couche porteuse (16) pour les matériaux de recouvrement d'ouvrage de maçonnerie ou de matériau isolant (14) étant appliquée comme matériau de parement sur le matériau calorifuge (15) comme matériau de recouvrement,
**caractérisé en ce**
que la couche porteuse (16) est constituée par une étoffe non tissée en matériaux synthétiques et/ou matériaux textiles et/ou en un tissu en fibres synthétiques ou de verre ou en fibres organiques comme le jute ou équivalent et que la couche porteuse (16) est pourvue, sur son côté (17) tourné vers le matériau calorifuge (15), d'un revêtement (18) qui est appliqué comme couche barrière de liquide en pénétrant avec une profondeur de pénétration d'1/10 à 1/2 de l'épaisseur de la couche porteuse (16) dans la couche porteuse (en 19).

2. Matériau isolant selon la revendication 1.
**caractérisé en ce**
que le revêtement (18) est configuré comme une couche de jonction entre le matériau calorifuge (15) et la couche porteuse (16).

3. Matériau isolant selon l'une des revendications 1 ou 2,
**caractérisé en ce**
que la couche porteuse (16) est une étoffe non tissée à base de polyester.

4. Matériau isolant selon l'une des revendications 1 à 3,
**caractérisé en ce**
que le revêtement (18) est une résine, en particulier une résine synthétique.

5. Matériau isolant selon la revendication 4,
**caractérisé en ce**
que le revêtement (18) est une résine époxy.

6. Matériau isolant selon l'une des revendications 1 à 5,
**caractérisé en ce**
que la couche porteuse (16) présente sur son côté qui n'est pas tourné (20) vers le matériau calorifuge (15) une surface à pores ouverts et/ou profilée (21) pour appliquer et maintenir un mortier au ciment, un mortier à la résine synthétique ou un crépi synthétique ou un crépi à grains synthétiques ou équivalent.

7. Matériau isolant selon l'une des revendications 1 à 6,
**caractérisé en ce**
que le matériau calorifuge (15) est pourvu d'un tissu de stabilisation ou de renforcement (27).

8. Matériau isolant selon l'une des revendications 1 à 7.
**caractérisé en ce**
que des canaux de diffusion (24) sont encastrés dans le matèriau calorifuge (15) sur la surface (23) qui est opposée à la couche porteuse (16).

9. Matériau isolant selon l'une des revendications 1 à 8,
**caractérisé en ce**
qu'une feuille de métal (26) est contrecollée sur le matériau calorifuge (15) sur la surface (23) qui est opposée à la couche porteuse (16).

10. Procédé pour réaliser des panneaux isolants pour des bâtiments neufs et nécessitant une rénovation à poser sur un ouvrage de maçonnerie porteur qui existe en tant que matériau calorifuge sous forme de panneau multicouches avec un corps de panneau à peu près rectangulaire en mousse de polyuréthane, le matériau calorifuge étant pourvu au moins sur l'un de ses côtés à grande surface d'un matériau de recouvrement,
**caractérisé en ce**
qu'en utilisant deux bandes transporteuses sans fin mobiles parallèlement une bande d'étoffe non tissée, qui est pourvue d'un revêtement sur un côté, est posée sur l'une des bandes transporteuses, une mousse de polyuréthane qui peut mousser est appliquée sur le côté de la bande d'étoffe non tissée qui présente le revètement et ensuite la bande, après être passée entre les deux bandes transporteuses est coupée en panneaux comme corps moulé durci à partir du boudin sans fin.
